(19) **Europäisches Patentamt / European Patent Office / Office européen des brevets**

(11) **EP 4 354 870 A1**

(12) **EUROPEAN PATENT APPLICATION**

(43) Date of publication:
**17.04.2024 Bulletin 2024/16**

(21) Application number: **22306541.8**

(22) Date of filing: **12.10.2022**

(51) International Patent Classification (IPC):
**H04N 19/55** $^{(2014.01)}$     **H04N 19/577** $^{(2014.01)}$

(52) Cooperative Patent Classification (CPC):
**H04N 19/577; H04N 19/55**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventors:
• **LE LEANNEC, Fabrice**
  **35830 Betton (FR)**
• **ANDRIVON, Pierre**
  **35340 Liffre (FR)**
• **RADOSAVLJEVIC, Milos**
  **35000 Rennes (FR)**
• **BLESTEL, Médéric**
  **35170 Bruz (FR)**

(74) Representative: **RVDB Rennes**
  **44 rue Lariboisière**
  **35235 Thorigné-Fouillard (FR)**

(54) **ENCODING/DECODING VIDEO PICTURE DATA**

(57)     The present application relates to bi-directional motion-compensated based predicting method of a block of a video picture. Two reference blocks in reference pictures in two distinct lists of reference pictures are determined for motion-compensation. The method determines if samples of a reference block is outside boundaries of a reference picture and in that case, determines a non-out-of-bound rectangular zone comprising at least one sample within said reference picture's boundaries and replaces said at least one sample that is outside the non-out-of-bound rectangular zone by corresponding samples of the other reference block which are within the other reference picture' boundaries.

Fig. 11

EP 4 354 870 A1

**Description**

The present application generally relates to video picture encoding/decoding. Particularly, but not exclusively, the technical field of the present application is related to bi-directional motion-compensation based prediction of a block of a video picture.

BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/recAT-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left boundaries spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH).** For example, the default CTU size (default CTU height, default CTU width) may equal to 128 **(CTU DW=CTU DH**=128)**.** A default CTU size (height, width) is encoded into the bitstream, for example at a sequence level in the Sequence Parameter Set (SPS).

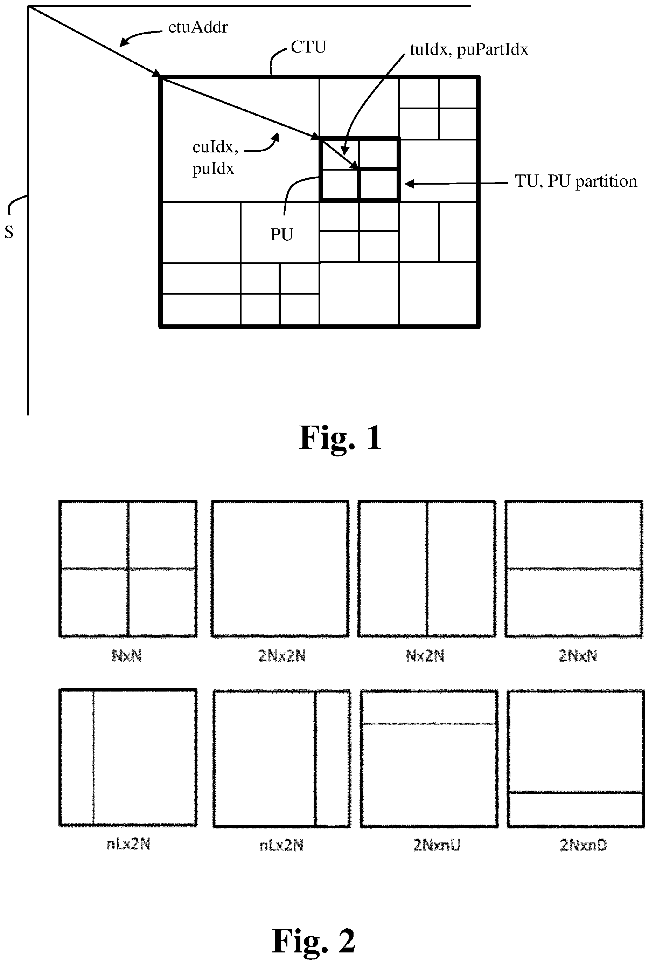

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter prediction CUs, symmetric non-square partitions (2NxN, Nx2N, used only in Inter prediction CUs), and asymmetric Partitions (used only in Inter prediction CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

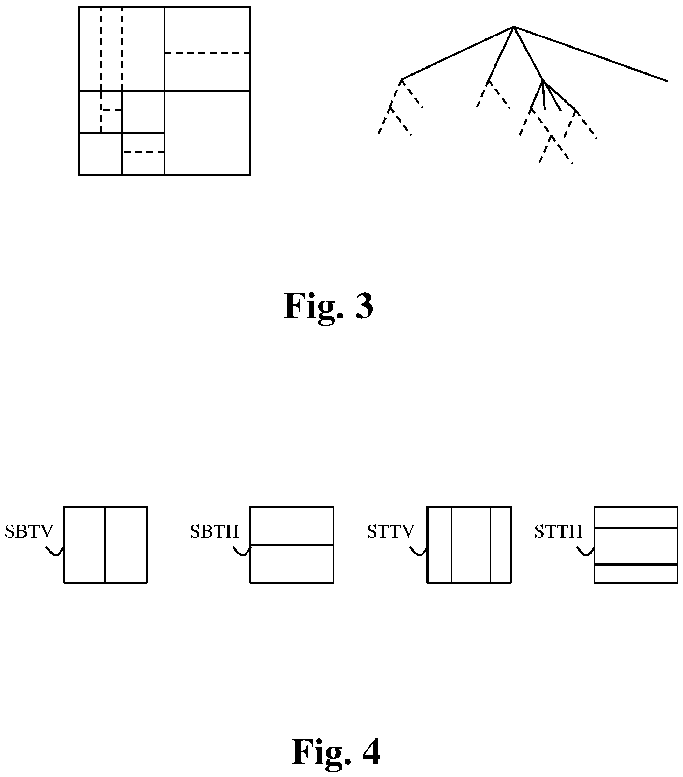

As illustrated on **Figure 3,** in VVC, the coding tree starts from a root node, i.e. the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

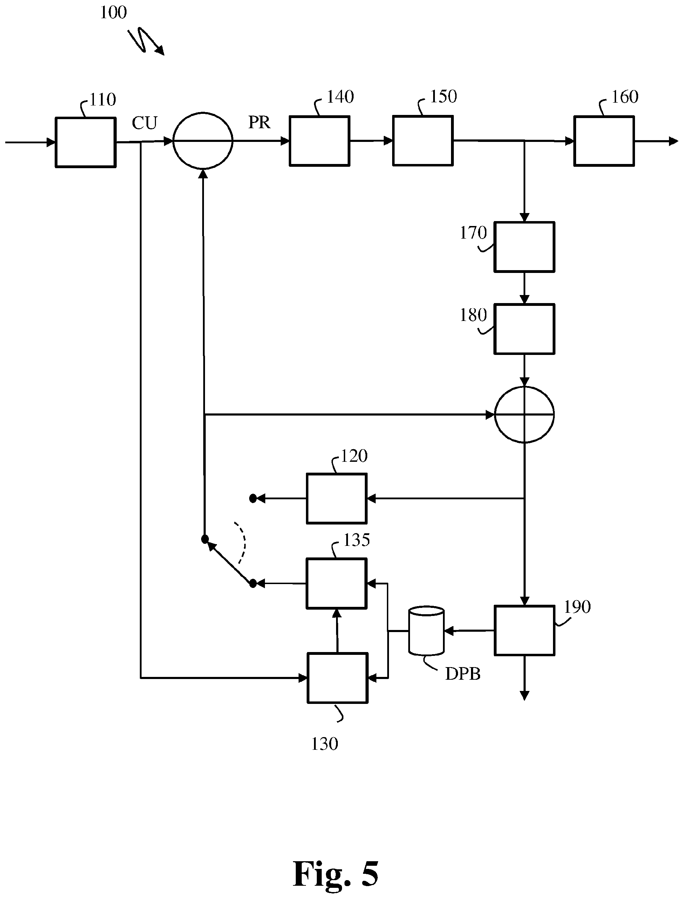

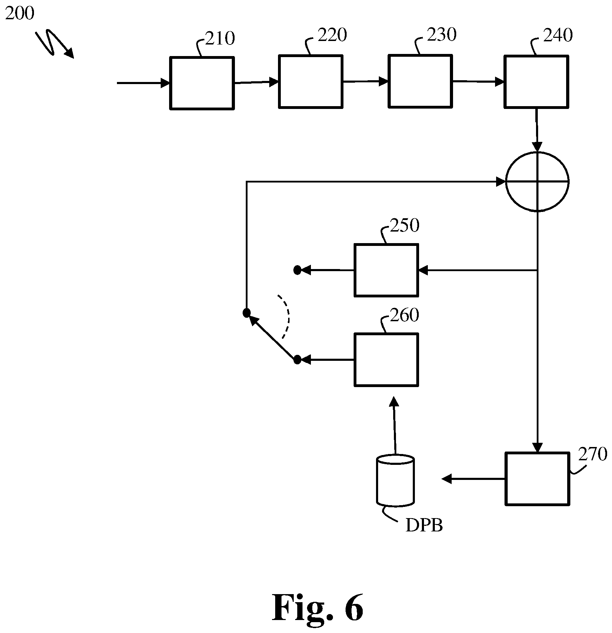

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along a block encoding loop using either an intra or inter prediction mode. The block encoding loop comprises steps 120 to 180.

Intra prediction (step 120) used intra prediction data. Intra prediction consists in predicting a current block by means of an intra-prediction block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference picture(s) used to predictively encode the current video picture, a reference block that is a good predictor of the current block. In uni-directional motion estimation/compensation, a candidate reference block belongs to a single reference picture of a reference picture list denoted L0 or L1, and in bi-directional motion estimation/compensation, the candidate reference block is derived from a reference block of the reference picture list L0 and a reference block of the reference picture list L1.

For instance, a good predictor of the current block is a candidate reference block which is similar to the current block. It may also correspond to a reference block that provides a good trade-off between its similarity to current bock, and the rate cost of motion information needed to indicate its use for the temporal prediction of current block.

The output of the motion estimation step 130 is inter-prediction data comprising motion information associated to the current block and other information used for obtaining a same prediction block at the encoding/decoding side. Typically motion information comprises one motion vector and a reference picture index for uni-directional estimation/compensation and two motion vectors and two reference picture indices for bi-direction estimation/compensation. Next, motion compensation (step 135) obtains a prediction block by means of the motion vector(s) and reference picture index (indices) determined by the motion estimation step 130. Basically, the reference block belonging to a selected reference picture and pointed to by a motion vector may be used as the prediction block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the prediction block.

Prediction information data is signaled into the bitstream. The prediction information may comprise prediction mode (intra or inter or skip), intra/inter prediction data and any other information used for obtaining a same prediction block at the decoding side.

The method 100 selects one prediction mode (the intra or inter prediction mode) by optimizing a rate-distortion trade-off taking into account the encoding of a prediction residual block calculated, for example, by subtracting a candidate prediction block from the current block, and the signaling of prediction information data required for determining said candidate prediction block at the decoding side.

Usually, the best prediction mode is given as being the prediction mode of a best coding mode p* for a current block given by:

$$p^* = \underset{p \in P}{\mathrm{Argmin}}\{RD_{cost}(p)\} \quad (1)$$

where P is the set of all candidate coding modes for the current block, *p* represents a candidate coding mode in that set, $RD_{cost}(p)$ is a rate-distortion cost of candidate coding mode p, typically expressed as:

$$RD_{cost(p)} = D(p) + \lambda.R(p)$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best prediction block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the prediction block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed video picture is divided into current blocks based on the partitioning information.

Each current block is reconstructed along a block decoding loop using either an intra or inter prediction mode. The block decoding loop comprises steps 220 to 270.

Each current block is entropy decoded from the bitstream. Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A prediction block is obtained through its intra prediction (step 250) or its motion-compensated temporal prediction (step 260). The prediction process performed at the decoding side is identical to that of the encoding side.

Next, the decoded prediction residual block and the prediction block are then combined, typically summed, which provides a reconstructed block.

In step 270, in-loop filters may apply to a reconstructed video picture (comprising reconstructed blocks or the filtered reconstructed blocks) and the reconstructed blocks or the filtered reconstructed blocks form a reference picture that may be stored into a decoded picture buffer (DPB) as above discussed **(Figure 5).**

In VVC, motion information is stored per 4x4 blocks in each video picture. This means once a reference picture is stored in the decoded picture buffer (DPB, **Figure 5** or **6),** motion vectors and reference pictures indices used for the temporal prediction of video picture blocks are stored on a 4x4 block basis. They can serve as temporal prediction of motion information for encoding/decoding a subsequent inter-prediction video picture.

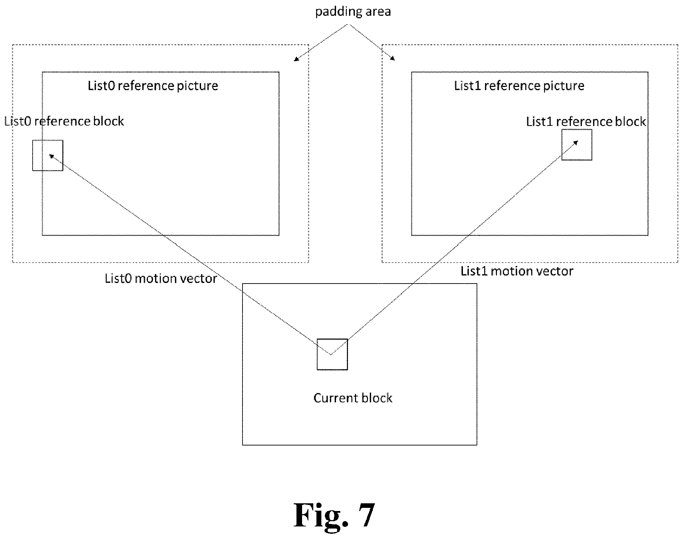

In VVC, a temporal prediction of a current block may be based on a reference block of a reference picture that may overlap a boundary of said reference picture. For example, **Figure 7** shows an example of a bi-directional motion-compensated based prediction of a current block based on a first reference block of a reference picture list L0 and a second reference block of a reference picture list L1. The first (respectively second) reference block is pointed to by a first (respectively second), motion vector. In the example of **Figure 7,** a first reference block is partly outside the boundaries of the reference picture of the reference picture list L0, and a second reference block is inside the boundaries of the reference picture of the reference picture list L1. More generally, a reference block of one of the two reference pictures or the two reference blocks of these two reference pictures can partly or entirely lie outside reference picture boundaries. Note that usually the reference picture boundaries are extended by a padding area.

To handle such situations, a motion-compensation based method handling out of boundaries reference blocks is described in section 2.1.7.5 of the JVET contribution JVET-Y0125 ("AHG12: Enhanced bi-directional motion compensation", Yi-Wen Chen, Che-Wei Kuo, Ning Yan, Wei Chen, Xiaoyu Xiu, Xianglin Wang, Joint Video Experts Team (JVET) of ITU-T SG 16 WP 3 and ISO/IEC JTC 1/SC 29 25th Meeting, by teleconference, 12-21 January 2022, Document JVET-Y0125).

Basically, to avoid prediction (motion-compensated prediction) blocks **b** be at least partly out of the reference picture boundaries which are less effective, when combining more than one motion-compensated prediction blocks, the OOB (out-of-boundaries) samples of a reference block **b** are discarded and only the non-OOB (in-boundaries) samples of said reference block **b** are used to generate a final prediction block. More precisely, let ($Pos\_x_{i,j}$, $Pos\_y_{i,j}$) be the cartesian coordinates of a sample position (i,j) within current block. Let $(Mv\_x_{i,j}^{Lx}, Mv\_y_{i,j}^{Lx})$ be the cartesian coordinates of motion vector (MV) associated with the sample position (i,j) within current block ($Lx$ indicates if the reference picture belongs to the reference picture list L0 (x=0) or to the reference picture list L1 (x=1). Let $Pos_{LeftBdry}$, $Pos_{RightBdry}$, $Pos_{TopBdry}$, $Pos_{BottomBdry}$ be cartesian coordinates of the 4 reference picture boundaries.

A OOB criteria computation for a prediction sample $P_{i,j}^{Lx}$ for sample position (i,j) of a reference block $P^{Lx}$ is given by the following equation (1):

$$(Pos\_x_{i,j} + Mv\_x_{i,j}^{Lx}) > (Pos_{RightBdry} + \text{half\_sample}),$$

$$(Pos\_x_{i,j} + Mv\_x_{i,j}^{Lx}) < (Pos_{LeftBdry} - \text{half\_sample}),$$

$$(Pos\_y_{i,j} + Mv\_y_{i,j}^{Lx}) > (Pos_{BottomBdry} + \text{half\_sample}),$$

or

$$(Pos\_y_{i,j} + Mv\_y_{i,j}^{Lx}) < (Pos_{TopBdry} - \text{half\_sample})$$

where *half_sample* represents half the distance between two neighboring luma sample (sample of the luma component of the video picture), according to the codec's MV (motion vector) internal representation accuracy (1/16-pel for VVC).

Table 1 provides an adaptive averaging of reference samples performed during bi-directional motion-compensation based prediction, based on a OOB criteria given by equation (1).

---

If $P_{L0}(i,j)$ is OOB and $P_{L1}(i,j)$ is non-OOB, then
$\qquad P_{final}(i,j) = P_{L1}(i,j)$
else if $P_{L0}(i,j)$ is non-OOB and $P_{L1}(i,j)$ is OOB
$\qquad P_{final}(i,j) = P_{L0}(i,j)$
else
$\qquad P_{final}(i,j) = (P_{L0}(i,j) + P_{L1}(i,j) + 1) >> 1$

---

Table 1

where $P_{Lx}(i,j)$ is the value of a sample of a reference block of the reference picture list *Lx* located at sample position (i,j) and $P_{final}(i,j)$ is the value of the sample of the final bi-directional motion-compensated based predicted block located at the sample position (i,j).

In other words, if a bi-directional motion-compensated based predicted block has one OOB reference block in one direction, then the block part that is evaluated as OOB is changed to (replaced by) a part of a reference block in the opposite direction.

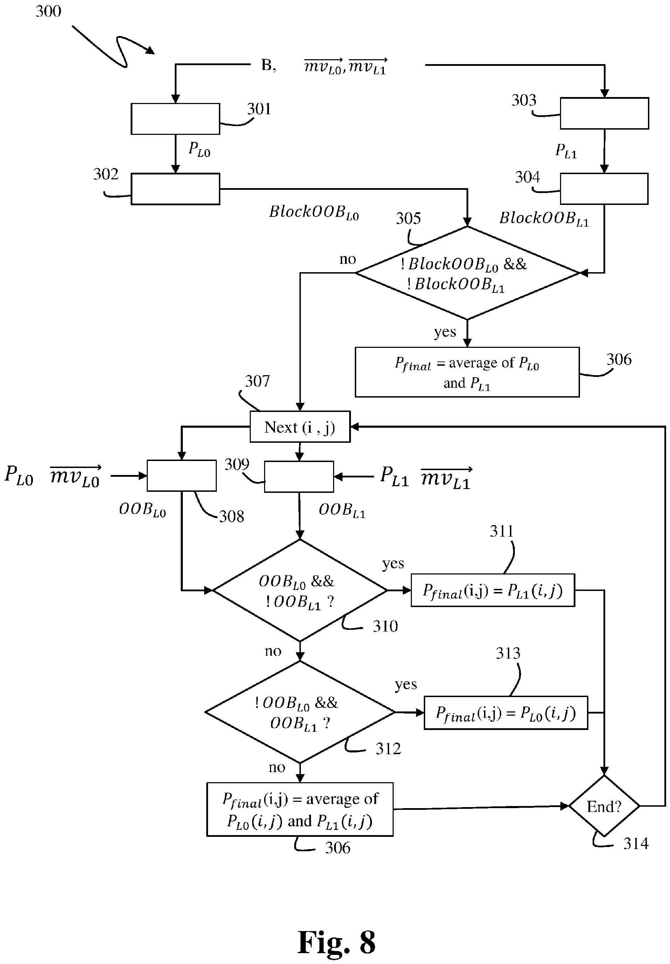

**Figure 8** shows schematically a block diagram of steps of method 300 of adaptive bi-directional motion-compensated based prediction of a block in case of one OOB predictor in accordance with the JVET contribution JVET-Y0125.

The input of method 300 is a block B to be bi-directional motion-compensated based predicted, together with two associated motion vectors $\overrightarrow{mv_{L0}}$ and $\overrightarrow{mv_{L1}}$ respectively for reference picture lists L0 and L1.

In step 301, method 300 determines a first reference block $P_{L0}$ in a reference picture of the reference picture list L0 making use of the motion vector $\overrightarrow{mv_{L0}}$.

In step 302, method 300 checks whether the first reference block $P_{L0}$ fulfils a block OOB criteria, i.e. whether the first reference block $P_{L0}$ is a OOB block or not. Method 300 assigns then a value to a Boolean value $BlockOOB_{L0}$. The Boolean value $BlockOOB_{L0}$ is true when the first reference block $P_{L0}$ is OOB and false otherwise.

In step 303, method 300 determines a second reference block $P_{L1}$ in a reference picture of the reference picture list L1 making use of the motion vector $\overrightarrow{mv_{L1}}$.

In step 304, method 300 checks whether the second reference block $P_{L1}$ fulfils a block OOB criteria, i.e. whether the second block $P_{L1}$ is a OOB block or not. Method 300 assigns then a value to a Boolean value $BlockOOB_{L1}$. The Boolean value $BlockOOB_{L1}$ is true when the second reference block $P_{L1}$ is OOB and false otherwise.

In one exemplary embodiment of step 302 and 303, the block OOB criteria is evaluated as follows.

Let MVF be a number of bits to represent motion vectors sub-pel fractional part. In other words, value $D = 2^{MVF}$ represents the distance between two neighboring full pixel positions in a reference picture.

The block OOB criteria is evaluated and the Boolean value $BlockOOB_{Lx}$ ($x = 0,1$) is assigned according to table 2.

```
// inputs: picture size (picWidth, picHeight)
//         block position (block_X, block_Y), block size (block_W, block_H)
//         motion vector (mv_x, mv_y)


xMax = (picWidth-1).D + D/2    // right upper bound for OOB criteria
xMin = - D/2                   // left upper bound for OOB criteria
yMax = (picHeight-1).D + D/2   // right upper bound for OOB criteria
yMin = - D/2                   // left upper bound for OOB criteria
```

$$x_{left} = block_X \times D + mv_x$$
$$y_{top} = block_Y \times D + mv_y$$
$$x_{right} = x_{left} + (block_W - 1) \times D$$
$$y_{bottom} = y_{top} + (block_H - 1) \times D$$

$$BlockOOB = \left(x_{left} \leq xMin \text{ OR } x_{right} \geq xMax \text{ OR } y_{top} \leq \right.$$

$$\left. yMin \text{ OR } y_{bottom} \geq yMax\right)$$

Table 2

where picWidth, picHeight are the numbers of columns and rows of the video picture, $block_X$, $block_Y$ are the position of the block B, $block_W$, $block_H$ are the size of the block B.

In step 305, method 300 checks whether the Boolean value $BlockOOB_{L0}$ is false and whether the Boolean value $BlockOOB_{L1}$ is false.

If the Boolean value $BlockOOB_{L0}$ is false and the Boolean value $BlockOOB_{L1}$ is false, i.e. if the first and second reference blocks $P_{L0}$ and $P_{L1}$ are non-OOB, then, in step 306, a final bi-prediction prediction block $P_{final}$ is given by averaging a first and a second uni-predicted blocks derived by uni-directional motion compensation making use of the motions vectors and the associated reference picture in the reference picture lists L0 and L1. Basically, each sample $P_{final}(i,j)$ of the final bi-directional motion-compensated based prediction block equals the average of the corresponding samples $P_{L0}(i,j)$ and $P_{L1}(i,j)$ of the first and second uni-predicted blocks:

$$P_{final} = \frac{P_{L0} + P_{L1}}{2}$$

If at least one of the Boolean values $BlockOOB_{L0}$ and $BlockOOB_{L1}$ is true, then step 305 is followed by steps 307-314.

In step 307, a current position (i,j) of block B is considered.

In step 308, method 300 checks whether the current sample $P_{L0}(i,j)$ of the first reference block $P_{L0}$ fulfils a sample OOB criteria, i.e. whether said sample is a OOB or not. Method 300 assigns then a value to a Boolean value $OOB_{L0}$. The Boolean value $OOB_{L0}$ is true when the sample $P_{L0}(i,j)$ is OOB and false otherwise.

In step 309, method 300 checks whether the current sample $P_{L1}(i,j)$ of the second reference block $P_{L1}$ fulfils a sample OOB criteria, i.e. whether said sample is a OOB or not. Method 300 assigns then a value to a Boolean value $OOB_{L1}$. The Boolean value $OOB_{L1}$ is true when the sample $P_{L1}(i,j)$ is OOB and false otherwise.

The sample OOB criteria is evaluated and the Boolean value $OOB_{Lz}$ ($z = 0,1$) is assigned according to table 3.

```
// inputs: picture size (picWidth, picHeight)
//        block position (block_X, block_Y), block size (block_W, block_H)
//        motion vector (mv_x, mv_y)
//        sample position in current block (i, j)


xMax = (picWidth-1).D + D/2    // right upper bound for OOB criteria
xMin = - DP_half               // left upper bound for OOB criteria
yMax = (picHeight-1).D + D/2   // right upper bound for OOB criteria
yMin = - DP/2                  // left upper bound for OOB criteria


x = (block_X + i) × D + mv_x
y = (block_Y + j) × D + mv_y




OOB_Lz = (x ≤ xMin OR x ≥ xMax OR y ≤ yMin OR y ≥ yMax)
```

Table 3

In step 310, method 300 checks whether the Boolean value $OOB_{L0}$ is true and the Boolean value $OOB_{L1}$ is false.

If the the Boolean value $OOB_{L0}$ is true and the Boolean value $OOB_{L1}$ is false, then, in step 311, the sample $P_{final}(i,j)$ of the final bi-directional motion-compensated based prediction block $P_{final}$ is set equal to the sample $P_{L1}(i,j)$ of the second reference block $P_{L1}$.

Otherwise, in step 312, method 300 checks whether the Boolean value $OOB_{L0}$ is false and the Boolean value $OOB_{L1}$ is true.

If the the Boolean value $OOB_{L0}$ is false and the Boolean value $OOB_{L1}$ is true, then, in step 313, the sample $P_{final}(i,j)$ of the final bi-directional motion-compensated based prediction block $P_{final}$ is set equal to the sample $P_{L0}(i,j)$ of the first reference block $P_{L0}$.

Otherwise, step 312 is followed by steps 306 and 314.

Steps 311 and 313 are followed by step 314.

In step 314, method 300 checks whether all the sample position (i,j) of the block B have been checked. If not, step 314 is followed by step 307 and a new current position (i,j) of block B is considered.

In method 300, a first block level test checks, for each reference block of the block B in reference picture lists L0 and L1, if the reference block is overlapping the boundaries of the reference picture it belongs to. If so, the concerned reference block is said to be OOB (out-of-bound). If at block-level, none of the two reference blocks is non-OOB, then usual block level motion compensation bi-prediction applied to predict the block B in a video picture, i.e. a final bi-prediction block of block B is generated by averaging a first and a second uni-predicted blocks derived by uni-directional motion compensation making use of motion vectors and associated reference pictures in the reference picture lists L0 and L1.

Otherwise, the final bi-prediction block is derived as follows. For each sample position in the block, the sample OOB criteria of table 3 is applied. If the sample of a reference block is OOB with respect to one prediction direction (i.e. the corresponding sample in corresponding reference picture is out of the reference picture bounds) and is not OOB with respect to the other prediction direction, then the sample of the reference block in the other prediction direction is taken as the final sample prediction value, and no averaging applies for said sample position. Otherwise, reference samples are averaged for said sample position.

As a consequence, in method 300 a sample-by-sample OOB decision is involved to determine how to compute prediction sample at each position of the block B.

This constitutes a drawback of method 300 because it leads to increased complexity of the bi-directional motion-compensated based prediction of a block of a video picture.

The problem solved by the present invention is how to solve the complexity issue of method 300, in particular how to avoid the sample-by-sample OOB criteria.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of predicting a block of a video picture based on bi-directional motion-compensation. The method comprises :

- determining a first reference block as a block of a first reference picture in a first reference picture list, said first reference block being pointed to by a first motion vector starting from the block of the video picture;

- determining a second reference block as a block of a second reference picture in a second reference picture list, said second reference block being pointed to by a second motion vector starting from the block of the video picture;

- checking whether samples of at least one of the first or second reference blocks are at least partially outside boundaries of the first or second reference picture;

wherein the method further comprises:

- if at least one sample of the first reference block is outside the first reference picture's boundaries, determining a first non-out-of-bound rectangular zone comprising at least one sample of the first reference block within the first reference picture's boundaries;

- if at least one sample of the second reference block is at least partially outside the second reference picture's boundaries, determining a second non-out-of-bound rectangular zone comprising at least one sample of the second reference block within the second reference picture's boundaries; and

- deriving a bi-directional motion-compensated based predicted block by replacing at least one sample of the first reference block by at least one co-located sample of the second reference block when the first reference block is at least partially outside the first non-out-of-bound rectangular zone and by replacing at least one sample of the second reference block by at least one co-located sample of the first reference block when the second reference block is at least partially outside the second non-out-of-bound rectangular zone.

In one exemplary embodiment, the first and second reference blocks being split into subblocks, the method further comprises for each current subblock position:

- if a first subblock located at the current subblock position in the first reference block is at least partially outside the first non-out-of-bound rectangular zone and a second subblock is within the second non-out-of-bound rectangular zone, deriving a bi-directional motion-compensated based predicted subblock as being the second subblock;

- if a first subblock located at the current subblock position in the first reference block is within the first non-out-of-bound rectangular zone and a second subblock is at least partially outside the second non-out-of-bound rectangular zone, deriving a bi-directional motion-compensated based predicted subblock as being the first subblock;

- otherwise deriving a bi-directional motion-compensated predicted subblock as being an average of samples of the first subblock and samples of the second subblock.

In one exemplary embodiment, if a first subblock is entirely inside the first non-out-of-bound rectangular zone and the second subblock is entirely inside the second non-out-of-bound rectangular zone then the method further comprises deriving a bi-directional motion-compensated predicted subblock as being an average of samples of the first subblock and samples of the second subblock.

In one exemplary embodiment, the method further comprises :

- if at least one sample of the first reference block is outside the first non-out-of-bound rectangular zone or at least one sample of the second reference block is outside the second non-out-of-bound rectangular zone,

- copying at least one sample of the first reference block into a first intermediate block when said at least one sample is inside the first non-out-of-bound rectangular zone and copying at least one sample of the second reference block into at least one sample position of the first intermediate block corresponding to at least one sample position of the first reference block located outside the first non-out-of-bound rectangular zone;

- copying at least one sample of the second reference block ($P_{L1}$) into a second intermediate block when said at least one sample is inside the second non-out-of-bound rectangular zone and copying at least one sample of the first reference block into at least one sample position of the second intermediate block corresponding to at least one sample position of the second reference block located outside the second non-out-of-bound rectangular zone;

- deriving a bi-directional motion-compensated based predicted block by averaging samples of the first and second intermediate blocks.

In one exemplary embodiment, averaging samples of the first and second intermediate blocks or samples of the first and second subblocks makes use of weighting factors.

In one exemplary embodiment, the first and second non-out-of-bound rectangular zones are determined from the motion vector associated with the first and second reference blocks and the size of the block of the video picture.

In one exemplary embodiment, the first and second non-out-of-bound rectangular zones are defined by a location of the top-left corner of a rectangle and a number of columns and a number of rows.

In one exemplary embodiment, the location of the top-left corner of a rectangle is relative to the top-left corner of the block of the video picture.

According to a second aspect of the present application, there is provided a method of encoding a block of video picture into a bitstream of encoded video picture data, the method comprising temporally predicting the block of video picture according to a method of the first aspect.

According to a third aspect of the present application, there is provided a method of decoding a block of video picture from a bitstream of encoded video picture data, the method comprising temporally predicting the block of video picture according to a method of the first aspect.

According to a fourth aspect of the present application, there is provided an apparatus comprising means for performing one of the method according to the first, second and/or third aspect of the present application.

According to a fifth aspect of the present application, there is provided a computer program product including instructions which, when the program is executed by one or more processors, causes the one or more processors to carry out a method according to the first, second and/or third of the present application.

According to a sixth aspect of the present application, there is provided a non-transitory storage medium carrying instructions of program code for executing a method according to the first, second and/or third of the present application.

The specific nature of at least one of the exemplary embodiments as well as other objects, advantages, features and uses of said at least one of exemplary embodiments will become evident from the following description of examples taken in conjunction with the accompanying drawings.

## BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with VVC

**Figure 4** shows examples of split modes supported in the multi-type tree partitioning in accordance with VVC

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** shows an example of a bi-directional motion-compensated based prediction in accordance with prior art;

**Figure 8** shows schematically a block diagram of steps of method 300 of adaptive bi-directional motion-compensated based prediction of a block in case of one OOB predictor in accordance with the JVET contribution JVET-Y0125;

**Figure 9** shows schematically a block diagram of steps of method 400 of adaptive bi-directional motion-compensated based prediction of a block in accordance with an exemplary embodiment;

**Figure 10** shows an example of a bi-directional motion-compensated based prediction in accordance with an exemplary embodiment;

**Figure 11** shows schematically a block diagram of steps of method 500 of adaptive bi-directional motion-compensated based prediction of a block in accordance with an exemplary embodiment;

**Figure 12** shows an example illustrating the result of a bi-directional motion-compensated based prediction in accordance with method 500;

**Figure 13** shows an example illustrating the result of a bi-directional motion-compensated based prediction in accordance with method 500; and

**Figure 14** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one of other aspects relate to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/recAT-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprises in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

Generally speaking, the present application relates to method of predicting a block of a video picture based on bi-directional motion-compensation. The method determines a first reference block as a block of a first reference picture in a first reference picture list, said first reference block being pointed to by a first motion vector starting from the block of the video picture and determines a second reference block as a block of a second reference picture in a second reference picture list, said second reference block being pointed to by a second motion vector starting from the block of the video picture. Next, the method checks whether samples of at least one of the first or second reference blocks are at least partially outside boundaries of the first or second reference picture. If at least one sample of the first reference block is outside the first reference picture's boundaries, the method further determines a first non-out-of-bound rectangular zone comprising at least one sample of the first reference block within the first reference picture's boundaries. If at least one sample of the second reference block is at least partially outside the second reference picture's boundaries, the method further determines a second non-out-of-bound rectangular zone comprising at least one sample of the second reference block within the second reference picture's boundaries. The method further derives a bi-directional motion-compensated based predicted block by replacing at least one sample of the first reference block by at least one co-located sample of the second reference block when the first reference block is at least partially outside the first non-out-of-bound rectangular zone and by replacing at least one sample of the second reference block by at least one co-located sample of the first reference block when the second reference block is at least partially outside the second non-out-of-bound rectangular zone.

The present invention determines a non-out-of-bound rectangular zone from sample positions of a reference block rather than processing a sample-by-sample OOB criteria as in priori art. This significantly reduces the complexity of the method compared to method 300. Indeed, instead of evaluating a block OOB criteria and a sample OOB criteria (method 300) for each sample position in a block, the OOB decision is driven by a non-out-of-bound zone that leads to a significant reduction of the complexity.

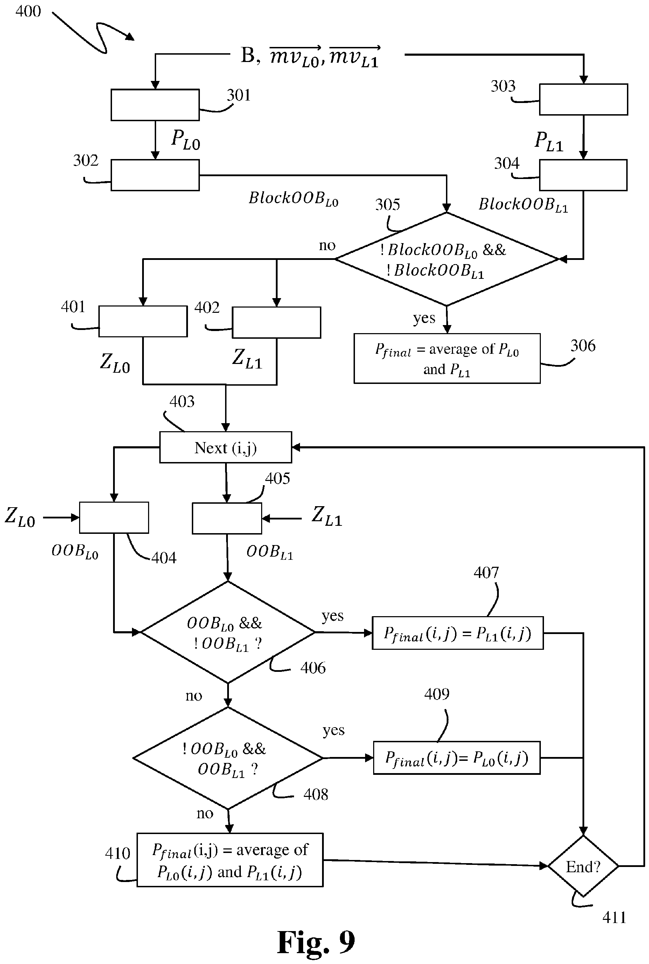

**Figure 9** shows schematically a block diagram of steps of method 400 of adaptive bi-directional motion-compensated based prediction of a block in accordance with an exemplary embodiment.

In this exemplary embodiment, the first reference block $P_{L0}$ and the second reference block $P_{L1}$ are split into subblocks.

For example, each reference block is split uniformly into 4x4 subblocks.

This exemplary embodiment is advantageous because the OOB decision is driven for each sub-block in each CU, leading to a significant reduction of the complexity for OOB decision.

For example, when 4x4 subblocks may be obtained for the first and for the second reference blocks, the number of OOB criteria evaluations is divided by 16 compared to a sample-by-sample evaluation of said OOB criteria.

If the Boolean values $Block00B_{L0}$ is true and/or the Boolean values $Block00B_{L1}$ is true (step 305), i.e. if the first reference block $P_{L0}$ is at least partially outside boundaries of the first reference picture and/or if the second reference

block $P_{L1}$ is at least partially outside boundaries of the second reference picture, step 305 is followed by steps 401-411.

In step 401, a first non-out-of-bound rectangular zone $Z_{L0}$ is determined. The first non-out-of-bound rectangular zone $Z_{L0}$ comprises at least one sample of the first reference block $P_{L0}$ within the first reference picture's boundaries.

In step 402, a second non-out-of-bound rectangular zone $Z_{L1}$ is determined. The second non-out-of-bound rectangular zone $Z_{L1}$ comprises at least one sample of the second reference block $P_{L1}$ within the second reference picture's boundaries.

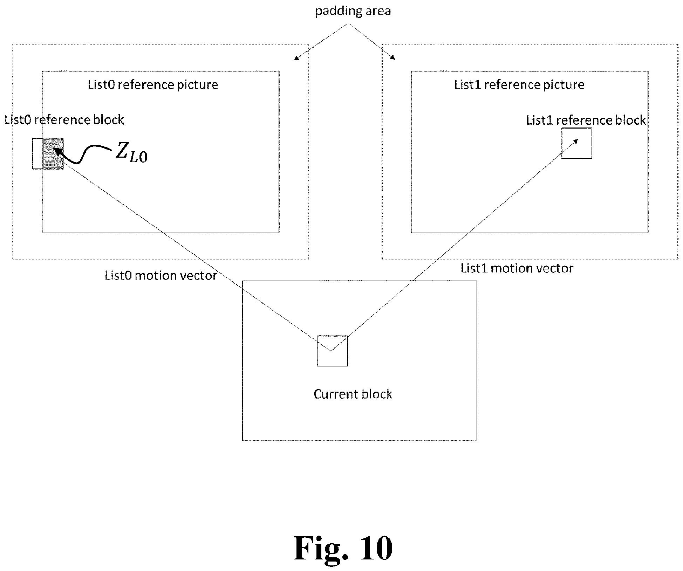

**Figure 10** shows an example of a bi-directional motion-compensated based prediction in accordance with an exemplary embodiment. In this example some samples of the first reference block $P_{L0}$ are outside of boundaries of the first reference picture and all the samples of the second reference block $P_{L1}$ are inside of boundaries of the second reference picture. A first non-out-of-bound rectangular zone $Z_{L0}$ is then formed by the samples of the first reference block $P_{L0}$ which are inside the boundaries of the first reference picture and a second non-out-of-bound rectangular zone $Z_{L1}$ contains all samples of the second reference block $P_{L1}$.

In step 403, a current subblock position (i,j) is considered.

In step 404, method 400 checks whether a subblock $sP_{L0}(i,j)$ located at the current subblock position (i,j) in the first reference block $P_{L0}$ is at least partially outside the first non-out-of-bound rectangular zone $Z_{L0}$ or not. Method 400 assigns then a value to a Boolean value $00B_{L0}$. The Boolean value $00B_{L0}$ is true if the subblock $sP_{L0}(i,j)$ is at least partially outside the first non-out-of-bound rectangular zone $Z_{L0}$ and false otherwise.

In step 405, method 400 checks whether a subblock $sP_{L1}(i,j)$ located at the current subblock position (i,j) in the second reference block $P_{L1}$ is at least partially outside the second non-out-of-bound rectangular zone $Z_{L1}$ or not. Method 400 assigns then a value to a Boolean value $00B_{L1}$. The Boolean value is true if the subblock $sP_{L1}(i,j)$ is at least partially outside the second non-out-of-bound rectangular zone $Z_{L1}$ and false otherwise.

In step 406, method 400 checks whether the Boolean value $00B_{L0}$ is true and the Boolean value is false.

If the Boolean value $00B_{L0}$ is true and the Boolean value is false i.e. if the first subblock $sP_{L0}(i,j)$ is at least partially outside the first non-out-of-bound rectangular zone $Z_{L0}$ and the second subblock $sP_{L1}(i,j)$ is within the second non-out-of-bound rectangular zone $Z_{L1}$, in step 407, method 400 derives a bi-directional motion-compensated based predicted subblock $sP_{final}(i,j)$ as being the second subblock $sP_{L1}(i,j)$.

Otherwise, in step 408, method 400 checks whether the Boolean value $00B_{L0}$ is false and the Boolean value $00B_{L1}$ is true.

If the Boolean value $00B_{L0}$ is false and the Boolean value is true i.e. if the first subblock $sP_{L0}(i,j)$ is within the first non-out-of-bound rectangular zone $Z_{L0}$ and the second subblock $sP_{L1}(i,j)$ is at least partially outside the second non-out-of-bound rectangular zone $Z_{L1}$, in step 409, method 400 derives a bi-directional motion-compensated based predicted subblock $sP_{final}(i,j)$ as being the first subblock $sP_{L0}(i,j)$.

Otherwise, in step 410, method 400 derives a bi-directional motion-compensated predicted subblock $sP_{final}(i,j)$ as being an average of samples of the first subblock $sP_{L0}(i,j)$ and samples of the second subblock $sP_{L1}(i,j)$.

Step 410 of method 400 is also applied in case first subblock $sP_{L0}(i,j)$ is entirely inside the first non-out-of-bound rectangular zone $Z_{L0}$ and the second subblock $sP_{L1}(i,j)$ is entirely inside the second non-out-of-bound rectangular zone $Z_{L1}$.

Steps 407, 409 and 410 are followed by step 411 in the course of which method 400 checks whether all the subblock positions have been considered. In that case method 400 ends. Otherwise step 411 is followed by step 403 in the course of which another current subblock position is considered.

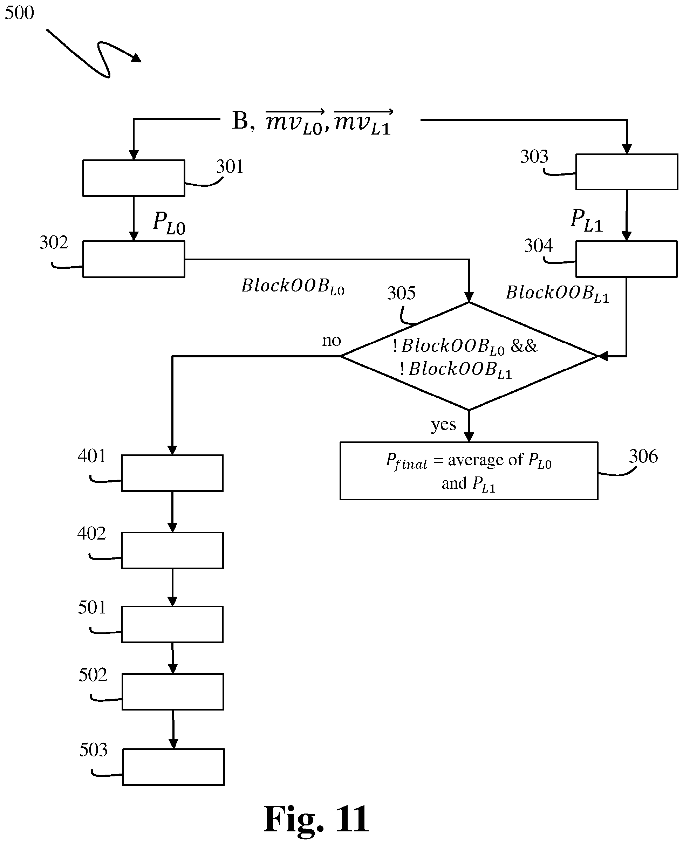

**Figure 11** shows schematically a block diagram of steps of method 500 of adaptive bi-directional motion-compensated based prediction of a block in accordance with an exemplary embodiment.

If the Boolean values $Block00B_{L0}$ is true and/or the Boolean values $Block00B_{L1}$ is true (step 305), i.e. if the first reference block $P_{L0}$ is at least partially outside boundaries of the first reference picture and/or if the second reference block $P_{L1}$ is at least partially outside boundaries of the second reference picture, step 305 is followed by steps 401, 402, 501-503.

In step 401, a first non-out-of-bound rectangular zone $Z_{L0}$ is determined. The first non-out-of-bound rectangular zone $Z_{L0}$ comprises at least one sample of the first reference block $P_{L0}$ within the first reference picture's boundaries.

In step 402, a second non-out-of-bound rectangular zone $Z_{L1}$ is determined. The second non-out-of-bound rectangular zone $Z_{L1}$ comprises at least one sample of the second reference block $P_{L1}$ within the second reference picture's boundaries.

In step 501, method 400 copies at least one sample of the first reference block $P_{L0}$ into a first intermediate block $P'_{L0}$ when said at least one sample is inside the first non-out-of-bound rectangular zone $Z_{L0}$ and copies at least one sample of the second reference block $P_{L1}$ into at least one sample position of the first intermediate block $P'_{L0}$ corresponding to at least one sample position of the first reference block $P_{L0}$ located outside the first non-out-of-bound

rectangular zone $Z_{L0}$.

In step 502, method 400 copies at least one sample of the second reference block $P_{L1}$ into a second intermediate

block $P'_{L1}$ when said at least one sample is inside the second non-out-of-bound rectangular zone $Z_{L1}$ and copies at

least one sample of the first reference block $P_{L0}$ into at least one sample position of the second intermediate block $P'_{L1}$
corresponding to at least one sample position of the second reference block $P_{L1}$ located outside the second non-out-of-bound rectangular zone $Z_{L1}$.

In step 503, method 500 derives a bi-directional motion-compensated based predicted block $P_{final}$ by averaging samples of the first and second intermediate blocks.

In one exemplary embodiment, the first and second non-out-of-bound rectangular zones are determined from the motion vectors associated with the first and second reference blocks and the size of the block of the video picture.

In one exemplary embodiment, a non-out-of-bound rectangular zone is defined by a location of the top-left corner of a rectangle and a number of columns and a number of rows.

In one exemplary embodiment, the coordinates $(x_Z, y_Z)$ of a location of the top-left corner of a rectangular zone and the number of columns (width) $w_Z$ and the number of rows (height) $h_Z$ of the non-out-of-bound rectangular zone are given by table 4.

```
// inputs: picture size (picWidth, picHeight)
//        block position (block_X, block_Y), block size (block_W, block_H)
//        motion vector (mv_x, mv_y)


// output:
//   non-OOB zone full-pel position (xZ, yZ) relative to current block
top-left corner,
//   non-OOB zone size (wZ, hZ) in full-pel luma samples
```

$\text{xMax} = (\text{picWidth-1}).D + D/2$     // right upper bound for OOB criteria
$\text{xMin} = - DP_{half}$          // left upper bound for OOB criteria
$\text{yMax} = (\text{picHeight-1}).D + D/2$     // right upper bound for OOB criteria
$\text{yMin} = - DP/2$          // left upper bound for OOB criteria

$$x_{left} = block_X \times D + mv_x$$
$$y_{top} = block_Y \times D + mv_y$$
$$x_{right} = x_{left} + (block_W - 1) \times D$$
$$y_{bottom} = y_{top} + (block_H - 1) \times D$$

$$x_Z = \frac{\max(xMin, x_{left}) - x_{left}}{D}$$

$$y_Z = \frac{\max(yMin, y_{top}) - y_{top}}{D}$$

$$w_Z = \frac{\min(xMax, x_{right}) - x_{left}}{D} - x_Z + 1$$

$$h_Z = \frac{\min(yMax, y_{bottom}) - y_{top}}{D} - y_Z + 1$$

Table 4

The intermediate blocks can be easily computed without any test on sample position as follows. For example, the first intermediate block $P'_{L0}$ is simply a copy of sample values of either the first reference block $P_{L0}$ or the second reference block $P_{L1}$. For each sample location (*i,j*) inside the first non-out-of-bound rectangular zone $Z_{L0}$, i.e.

$i \in [x_{Z_{L_0}}, x_{Z_{L_0}} + w_{Z_{L_0}} - 1]$ and $j \in [y_{Z_{L_0}}, y_{Z_{L_0}} + h_{Z_{L_0}} - 1]$, the value of sample $P'_{L0}(i,j)$ is set equal to value of the sample $P_{L0}(i,j)$ and for each sample location $(i,j)$ outside the first non-out-of-bound rectangular zone $Z_{L0}$, the value of sample $P'_{L0}(i,j)$ is set equal to value of the sample $P_{L1}(i,j)$.

To compute intermediate block $P'_{L0}$ without any test, one may first entirely copy block $P_{L1}$ into block $P'_{L0}$ .Next, a loop on samples positions $i \in [x_{Z_{L_0}}, x_{Z_{L_0}} + w_{Z_{L_0}} - 1]$ and $j \in [y_{Z_{L_0}}, y_{Z_{L_0}} + h_{Z_{L_0}} - 1]$ may be performed, and for each of the positions (i,j), the sample $P_{L0}(i,j)$ value of block $P_{L0}$ at position (i,j) is copied to block $P'_{L0}$ at position (i,j).

Thus, intermediate block $P'_{L0}$ is obtained in a very straightforward way, without any check at sample or sub-block level. Same remark applies for the second intermediate block $P'_{L1}$ .

In one exemplary embodiment of step 503, the bi-directional motion-compensated based predicted block $P_{final}$ is derived by:

$$P_{final}(i,j) = \frac{P'_{L0}(i,j) + P'_{L1}(i,j)}{2}$$

In one exemplary embodiment of step 503, averaging samples of the first and second intermediate blocks or samples of the first and second subblocks make use of weighting factors.

In one exemplary embodiment of step 503, the bi-directional motion-compensated based predicted block $P_{final}$ is derived by:

$$P_{final}(i,j) = \frac{w_0 * P'_{L0}(i,j) + w_1 * P'_{L1}(i,j)}{w_0 + w_1}$$

For example, $w_0 = w_0 = 1/2$

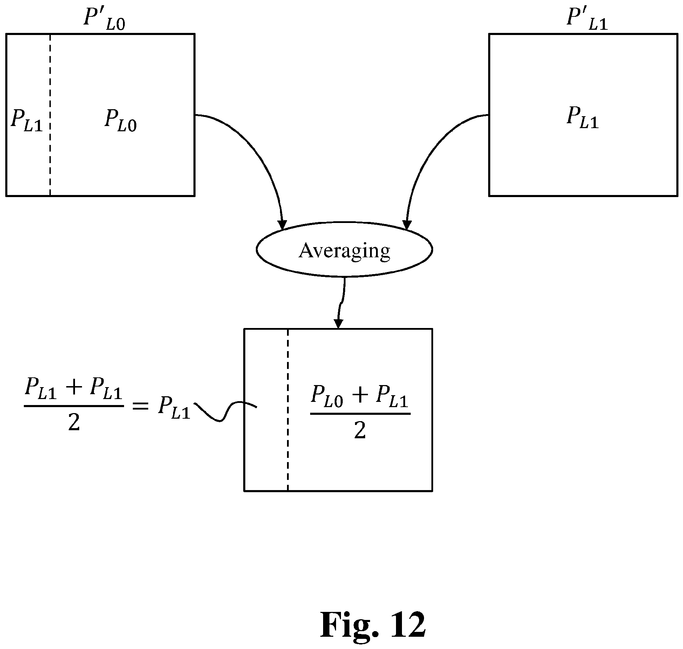

**Figure 12** shows an example illustrating the result of a bi-directional motion-compensated based prediction in accordance with method 500.

This example corresponds to the example of the first and second reference blocks given in the example of **Figure 10** where only the first reference block is partially outside the boundaries of the first reference picture.

The example of **Figure 12** shows that the first intermediate block comprises samples of the first reference block and samples of the second reference blocks located in a band located on the left of the first reference block and the second intermediate block comprises only samples of the second reference block. The bi-directional motion-compensated based predicted block $P_{final}$ is then derived by averaging the first and the second intermediate blocks. In the example, the sample values in the left band of the bi-directional motion-compensated based predicted block $P_{final}$ equal the values of the samples of the second reference block and the values of the samples inside the first non-out-of-bound rectangular zone are an average of samples of the first and the second reference blocks.

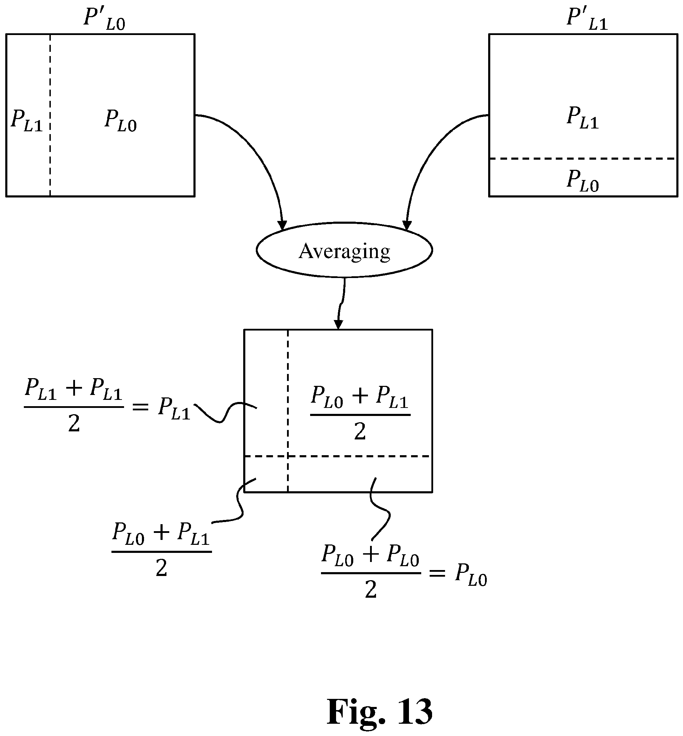

**Figure 13** shows another example illustrating the result of a bi-directional motion-compensated based prediction in accordance with method 500.

In this example the first reference block is partially outside the boundaries of the first reference picture and the second reference block is partially outside the boundaries of the second reference picture.

The example of **Figure 13** shows that the first intermediate block comprises samples of the first reference block and samples of the second reference blocks located in a first band located in the left of the first reference block and the second intermediate block comprises samples of the second reference block and samples of the first reference block located in a second band located in the bottom of the second reference block. The bi-directional motion-compensated based predicted block $P_{final}$ is then derived by averaging the first and the second intermediate blocks. In the given example, the sample values in the first band of the bi-directional motion-compensated based predicted block $P_{final}$ equal the values of the samples of the second reference block, the values of the samples inside an intersection of the first and second non-out-of-bound rectangular zones are an average of samples of the first and the second reference blocks, the values of samples in the second band of the bi-directional motion-compensated based predicted block $P_{final}$ equal the values of the samples of the first reference block and the values of sample located in a bottom-left corner of the bi-directional motion-compensated based predicted block $P_{final}$ equal an average of samples of the first and second reference blocks.

Method 500 is advantageous because method 300, 400 and 500 provides same results but method 500 does not involve any checking operation at sample level or subblock level, as is the case in the prior art method and in method 400.

Therefore, method 500 has the advantage of preserving the compression efficiency of the prior art method, while significantly reducing its complexity.

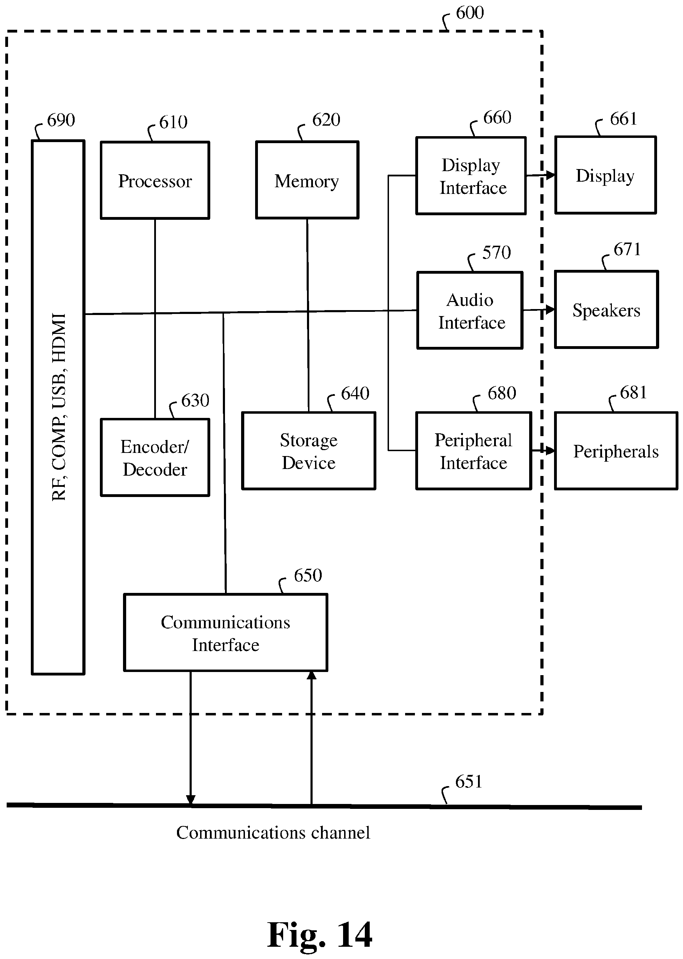

**Figure 14** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-14,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of predicting a block of a video picture based on bi-directional motion-compensation, wherein the method comprises :

- determining (301) a first reference block as a block of a first reference picture in a first reference picture list, said first reference block being pointed to by a first motion vector starting from the block of the video picture;
- determining (303) a second reference block as a block of a second reference picture in a second reference picture list, said second reference block being pointed to by a second motion vector starting from the block of the video picture;
- checking (305) whether samples of at least one of the first or second reference blocks are at least partially outside boundaries of the first or second reference picture;

wherein the method further comprises:

- if at least one sample of the first reference block is outside the first reference picture's boundaries, determining (401) a first non-out-of-bound rectangular zone ($Z_{L0}$) comprising at least one sample of the first reference block within the first reference picture's boundaries;
- if at least one sample of the second reference block is at least partially outside the second reference picture's boundaries, determining (402) a second non-out-of-bound rectangular zone ($Z_{L1}$) comprising at least one sample of the second reference block within the second reference picture's boundaries; and
- deriving (403-411, 501-503) a bi-directional motion-compensated based predicted block by replacing at least one sample of the first reference block by at least one co-located sample of the second reference block when the first reference block is at least partially outside the first non-out-of-bound rectangular zone and by replacing at least one sample of the second reference block by at least one co-located sample of the first reference block when the second reference block is at least partially outside the second non-out-of-bound rectangular zone.

2. The method of claim 1, wherein the first and second reference blocks being split into subblocks, the method further comprises for each current subblock position:

- if a first subblock ($sP_{L0}(i,j)$) located at the current subblock position in the first reference block is at least partially outside the first non-out-of-bound rectangular zone ($Z_{L0}$) and a second subblock ($sP_{L1}(i,j)$) is within the second non-out-of-bound rectangular zone ($Z_{L1}$) (406), deriving (407) a bi-directional motion-compensated based predicted subblock ($sP_{final}(i,j)$) as being the second subblock ($sP_{L1}(i,j)$);
- if a first subblock ($sP_{L0}(i,j)$) located at the current subblock position in the first reference block is within the first non-out-of-bound rectangular zone ($Z_{L0}$) and a second subblock ($sP_{L1}(i,j)$) is at least partially outside the second non-out-of-bound rectangular zone ($Z_{L1}$) (408), deriving (409) a bi-directional motion-compensated based predicted subblock ($sP_{final}(i,j)$) as being the first subblock ($sP_{L0}(i,j)$);
- otherwise deriving (410) a bi-directional motion-compensated predicted subblock ($sP_{final}(i,j)$) as being an average of samples of the first subblock ($sP_{L0}(i,j)$) and samples of the second subblock ($sP_{L1}(i,j)$).

3. The method of claim 2, wherein if a first subblock ($sP_{L0}(i,j)$) is entirely inside the first non-out-of-bound rectangular zone ($Z_{L0}$) and the second subblock ($sP_{L1}(i,j)$) is entirely inside the second non-out-of-bound rectangular zone ($Z_{L1}$) then the method further comprises deriving (410) a bi-directional motion-compensated predicted subblock ($sP_{final}(i,j)$) as being an average of samples of the first subblock ($sP_{L0}(i,j)$) and samples of the second subblock ($sP_{L1}(i,j)$)..

4. The method of claim 1, wherein the method further comprises :

- if at least one sample of the first reference block is outside the first non-out-of-bound rectangular zone or at least one sample of the second reference block is outside the second non-out-of-bound rectangular zone,

- copying (501) at least one sample of the first reference block ($P_{L0}$) into a first intermediate block $(P'_{L0})$ when said at least one sample is inside the first non-out-of-bound rectangular zone ($Z_{L0}$) and copying at least one sample of the second reference block ($P_{L1}$) into at least one sample position of the first intermediate

block $(P'_{L0})$ corresponding to at least one sample position of the first reference block $(P_{L0})$ located outside the first non-out-of-bound rectangular zone $(Z_{L0})$;

- copying (502) at least one sample of the second reference block $(P_{L1})$ into a second intermediate block

$(P'_{L1})$ when said at least one sample is inside the second non-out-of-bound rectangular zone $(Z_{L1})$ and copying at least one sample of the first reference block $(P_{L0})$ into at least one sample position of the second

intermediate block $(P'_{L1})$ corresponding to at least one sample position of the second reference block $(P_{L1})$ located outside the second non-out-of-bound rectangular zone $(Z_{L1})$;

- deriving (503) a bi-directional motion-compensated based predicted block by averaging samples of the first and second intermediate blocks.

5. The method of one of claims 2 to 4, wherein averaging samples of the first and second intermediate blocks or samples of the first and second subblocks makes use of weighting factors.

6. The method of one of claims 1 to 5, wherein the first and second non-out-of-bound rectangular zones are determined from the motion vector associated with the first and second reference blocks and the size of the block of the video picture.

7. The method of claim 6, wherein the first and second non-out-of-bound rectangular zones are defined by a location of the top-left corner of a rectangle and a number of columns and a number of rows.

8. The method of claim 7, wherein the location of the top-left corner of a rectangle is relative to the top-left corner of the block of the video picture.

9. A method of encoding a block of video picture into a bitstream of encoded video picture data, the method comprising temporally predicting the block of video picture according to a method of one of claims 1 to 8.

10. A method of decoding a block of video picture from a bitstream of encoded video picture data, the method comprising temporally predicting the block of video picture according to a method of one of claims 1 to 8.

11. An apparatus comprising means for performing one of the method claimed in any one of claims 1 to 10.

12. A computer program product including instructions which, when the program is executed by one or more processors, causes the one or more processors to carry out a method claimed in any one of claims 1 to 10.

13. A non-transitory storage medium carrying instructions of program code for executing a method claimed in any one of claims 1 to 10.

**Fig. 1**

**Fig. 2**

# Fig. 3

# Fig. 4

**Fig. 5**

**Fig. 6**

Fig. 7

300

B,  $\overrightarrow{mv_{L0}}, \overrightarrow{mv_{L1}}$

301

303

$P_{L0}$

$P_{L1}$

302

304

$BlockOOB_{L0}$

$BlockOOB_{L1}$

305

no

$! BlockOOB_{L0}$ &&
$! BlockOOB_{L1}$

yes

$P_{final}$ = average of $P_{L0}$
and $P_{L1}$

306

307

Next ( i , j )

$P_{L0}$   $\overrightarrow{mv_{L0}}$

309

$P_{L1}$   $\overrightarrow{mv_{L1}}$

$OOB_{L0}$

308

$OOB_{L1}$

311

yes

$OOB_{L0}$ &&
$! OOB_{L1}$ ?

$P_{final}$(i,j) = $P_{L1}(i,j)$

310

no

313

yes

$! OOB_{L0}$ &&
$OOB_{L1}$ ?

$P_{final}$(i,j) = $P_{L0}(i,j)$

312

no

$P_{final}$(i,j) = average of
$P_{L0}(i,j)$ and $P_{L1}(i,j)$

306

End?

314

## Fig. 8

400

$$B, \overrightarrow{mv_{L0}}, \overrightarrow{mv_{L1}}$$

301

$P_{L0}$

303

302

$BlockOOB_{L0}$

305

$P_{L1}$

304

$BlockOOB_{L1}$

no → $!BlockOOB_{L0}$ &&
$!BlockOOB_{L1}$

401

402

yes

$Z_{L0}$

$Z_{L1}$

$P_{final}$ = average of $P_{L0}$
and $P_{L1}$

306

403

Next (i,j)

405

$Z_{L0}$ →

$Z_{L1}$

$OOB_{L0}$

404

$OOB_{L1}$

407

$OOB_{L0}$ &&
$!OOB_{L1}$ ?

yes

$P_{final}(i,j) = P_{L1}(i,j)$

406

no

409

$!OOB_{L0}$ &&
$OOB_{L1}$ ?

yes

$P_{final}(i,j) = P_{L0}(i,j)$

408

no

410

$P_{final}$(i,j) = average of
$P_{L0}(i,j)$ and $P_{L1}(i,j)$

End?

411

**Fig. 9**

**Fig. 10**

500

B, $\overrightarrow{mv_{L0}}, \overrightarrow{mv_{L1}}$

301

303

$P_{L0}$

302

$P_{L1}$

304

$BlockOOB_{L0}$

305

$BlockOOB_{L1}$

no

$! BlockOOB_{L0} \,\&\&$
$! BlockOOB_{L1}$

yes

$P_{final}$ = average of $P_{L0}$
and $P_{L1}$

306

401

402

501

502

503

**Fig. 11**

$$P'_{L0}$$

$$P'_{L1}$$

$$P_{L1} \mid P_{L0}$$

$$P_{L1}$$

Averaging

$$\frac{P_{L1} + P_{L1}}{2} = P_{L1}$$

$$\frac{P_{L0} + P_{L1}}{2}$$

**Fig. 12**

$$P'_{L0}$$

$$P_{L1} \quad P_{L0}$$

$$P'_{L1}$$

$$P_{L1}$$

$$P_{L0}$$

Averaging

$$\frac{P_{L1} + P_{L1}}{2} = P_{L1}$$

$$\frac{P_{L0} + P_{L1}}{2}$$

$$\frac{P_{L0} + P_{L1}}{2}$$

$$\frac{P_{L0} + P_{L0}}{2} = P_{L0}$$

# Fig. 13

**Fig. 14**

Europäisches
Patentamt

European
Patent Office

Office européen
des brevets

# EUROPEAN SEARCH REPORT

Application Number

EP 22 30 6541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Y-W CHEN ET AL: "EE2-Test2.2: Enhanced bi-directional motion compensation", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0136 ; m59469 26 April 2022 (2022-04-26), XP030301021, Retrieved from the Internet: URL:https://jvet-experts.org/doc_end_user/documents/26_Teleconference/wg11/JVET-Z0136-v2.zip JVET-Z0136_r1.docx [retrieved on 2022-04-26] * sections 1, 2.1, 2.2 * ----- | 1-13 | INV. H04N19/55 H04N19/577 |
| Y | COBAN M ET AL: "Algorithm description of Enhanced Compression Model 6 (ECM 6)", 139. MPEG MEETING; 20220718 - 20220722; ONLINE; (MOTION PICTURE EXPERT GROUP OR ISO/IEC JTC1/SC29/WG11), , no. m60618 ; JVET-AA2025 11 October 2022 (2022-10-11), XP030304402, Retrieved from the Internet: URL:https://dms.mpeg.expert/doc_end_user/documents/139_Teleconference/wg11/m60618-JVET-AA2025-v1-JVET-AA2025.zip JVET-AA2025-v1.docx [retrieved on 2022-10-11] * sections 2, 3.2.12 * ----- | 1-13 | |
| A | US 2019/082193 A1 (SUN YU-CHEN [US] ET AL) 14 March 2019 (2019-03-14) * paragraphs [0078] - [0092] * ----- | 1-13 | |

TECHNICAL FIELDS
SEARCHED      (IPC)

H04N

The present search report has been drawn up for all claims

| Place of search | Date of completion of the search | Examiner |
|---|---|---|
| Munich | 8 February 2023 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

1

## ANNEX TO THE EUROPEAN SEARCH REPORT
## ON EUROPEAN PATENT APPLICATION NO.

EP 22 30 6541

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2023

| Patent document cited in search report | Publication date | Patent family member(s) | | Publication date |
|---|---|---|---|---|
| US 2019082193 A1 | 14-03-2019 | US | 2019082193 A1 | 14-03-2019 |
| | | WO | 2019051146 A1 | 14-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YI-WEN CHEN ; CHE-WEI KUO ; NING YAN ; WEI CHEN ; XIAOYU XIU ; XIANGLIN WANG.** AHG12: Enhanced bi-directional motion compensation. *JVET-Y0125*